# EUROPÄISCHE PATENTSCHRIFT

(11) **EP 0 446 428 B1**
(45) Veröffentlichungstag und Bekanntmachung des Hinweises auf die Patenterteilung: **01.09.1993**
(21) Anmeldenummer: 90122373.5
(22) Anmeldetag: 23.11.1990
(51) Int. Cl.: B62D 1/18, B62D 1/19

(54) **Als Teleskoprohr ausgebildete, vorzugsweise durch Handkraft höhenverstellbare Kraftfahrzeuglenksäule**
Vehicle steering column, built with telescopic tubes, preferably manually adjustable in length
Colonne de direction de véhicule constituée de tubes télescopiques de préférence réglable manuellement en hauteur

(30) Priorität: 16.03.1990 DE 4008481
(43) Veröffentlichungstag der Anmeldung: 18.09.1991
(73) Patentinhaber: REICHE & CO., 32791 Lage (DE)
(72) Erfinder: Arnold, Hans, W-4937 Lage (DE)
(74) Vertreter: Stracke, Alexander, Dipl.-Ing.

(56) Entgegenhaltungen:
- EP-A- 0 342 350
- DE-A- 3 202 669
- GB-A- 2 205 149
- US-A- 4 833 936

## Beschreibung

Die Erfindung bezieht sich auf eine als Teleskoprohr ausgebildete, vorzugsweise durch Handkraft höhenverstellbare Kraftfahrzeuglenksäule mit einem mit mindestens einer aufgegossenen oder aufgespritzten Gleitbuchse aus Kunststoff oder Metall versehenen Innenrohr und einem Außenrohr mit vorgefertigten Gleitflächen.

Es ist eine Kraftfahrzeuglenksäule dieser Art bekannt (DE-PS 32 02 669), bei der das Lenkrad in der Höhe durch eine Verschiebekraft verstellbar ist, die kleiner ist als 100 N.

Bei dieser bekannten Kraftfahrzeuglenksäule ist das Innenrohr im Querschnitt dreieckförmig gestaltet und im Überlappungsbereich zwischen dem Außen-und dem Innenrohr mit zwei Gleitbuchsen ausgerüstet, mit denen das Innenrohr in einer Form umspritzt oder umgossen wurde. Zur Erzielung einer verdrehfesten Verbindung zwischen dem Außen- und dem Innenrohr wird das zylindrische Außenrohr in einem Teilbereich auf die Geometrie der Gleitbuchsen geformt und auf die Gleitbuchsen gestülpt. Zur Erzielung einer spielfreien Führung zwischen dem Außen- und dem Innenrohr im Bereich der Gleitflächen wird der Rohrabschnitt zwischen den Buchsen als Drehstab verwendet und tordiert, so daß ein Gleitflächenteil des Innenrohres gegenüber dem anderen vorgespannt ist.

Das Vorspannmoment muß in engen Grenzen gehalten werden. Die untere Grenze ist durch das Moment am Lenkrad gegeben, das spielfrei übertragen werden muß und im PKW-Bereich mit maximal 6 Nm beziffern wird.

Die obere Grenze wird durch die vom Vorspannmoment erzeugte Reibkraft zwischen Außen- und Innenrohr vorgegeben.

Dieser Wert ist gefühlsabhängig und wird z.Z. für Hand höhenverstellbare Kraftfahrzeuglenksäulen mit maximal 120 N zugelassen.

Da ein Vorspannmoment von 6 Nm eine Verstellkraft von ca. 85 N erzeugt, sind geringere Verstellkräfte nach dem oben angegebenen Verfahren nicht zu erreichen.

Da besonders bei frontgetriebenen Kraftfahrzeugen bei schnell gefahrenen Geradeausfahrten durch Straßenunebenheiten kurzzeitig Drehmomente größer als 6 Nm auftreten, wird die Spielfreiheit in diesem Bereich nicht erreicht.

Der Erfindung liegt die Aufgabe zugrunde, eine Kraftfahrzeuglenksäule der eingangs genannten Art so zu gestalten, daß die Spielfreiheit zwischen den Gleitflächen des Außenrohres und des Innenrohres ohne Verwendung eines durch einen Drehstab erzeugten Vorspannmomentes erreicht werden kann.

Diese Aufgabe wird erfindungsgemäß dadurch gelöst, daß zwischen dem Außenrohr und dem Innenrohr oder zwischen dem Außenrohr und der Gleitbuchse des Innenrohres zwei Keilstücke mittels einer dazwischenliegenden Feder quer zur Lenksäulenachse auf zwei schiefen Ebenen verschiebbar gelagert sind.

Durch diese federbelasteten Keilstücke wird der Toleranzspalt zwischen den Gleitflächen des Innen- und des Außenrohres verschlossen.

Da die Verschiebung der Keilstücke im unbelasteten Zustand der Kraftfahrzeuglenksäule erfolgt, kann die Federkraft gering und somit auch die Verstellkraft der Lenksäulenteile in axialer Richtung niedrig gehalten werden.

Weitere Merkmale der Erfindung ergeben sich aus den Unteransprüchen. Vorteilhafte Ausführungen der erfindungsgemäßen Kraftfahrzeuglenksäule sind in den Zeichnungen dargestellt und werden im folgenden beschrieben. Es zeigen:
- Fig. 1: eine als Teleskoprohr ausgebildete Kraftfahrzeuglenksäule im Grundriß,
- Fig. 2: einen Schnitt nach der Linie II-II in Fig. 1,
- Fig. 3: eine Abwandlungsform der Ausführung nach der Fig. 2 im Schnitt,
- Fig. 4: eine Ansicht in Richtung des Pfeiles IV in Fig. 3 unter Weglassung des Außenrohres,
- Fig. 5: eine einstückige Ausbildung zweier Keilstücke mit dazwischen angeordneter Feder im Grundriß und
- Fig. 6: eine Ansicht in Richtung des Pfeiles VI in Fig. 5.

Die Kraftfahrzeuglenksäule 1 weist ein Außenrohr 2 auf, das im oberen und mittleren Bereich zylindrisch und im unteren Teilbereich 3 im Querschnitt dreieckförmig ausgebildet ist. Dieses Außenrohr umgreift formschlüssig teilweise ein im Querschnitt ebenfalls dreieckförmig ausgebildetes Innenrohr 4. Am Innenrohr ist eine Gleitbuchse 5 befestigt, die aus Kunststoff oder aus Metall gefertigt sein kann und auf das Innenrohr in einer Form gegossen oder gespritzt wird, so daß die äußeren Gleitflächen in ihrer Toleranz von dem Formwerkzeug bestimmt werden und die Toleranzen und Fertigungsungenauigkeiten des Innenrohres die Toleranzen der Gleitflächen der Gleitbuchse nicht beeinträchtigen.

Bei den in den Zeichnungen dargestellten Ausführungsbeispielen wird der axiale Verschiebebereich der Kraftfahrzeuglenksäule durch Profile mit drei tragenden Flächen gebildet.

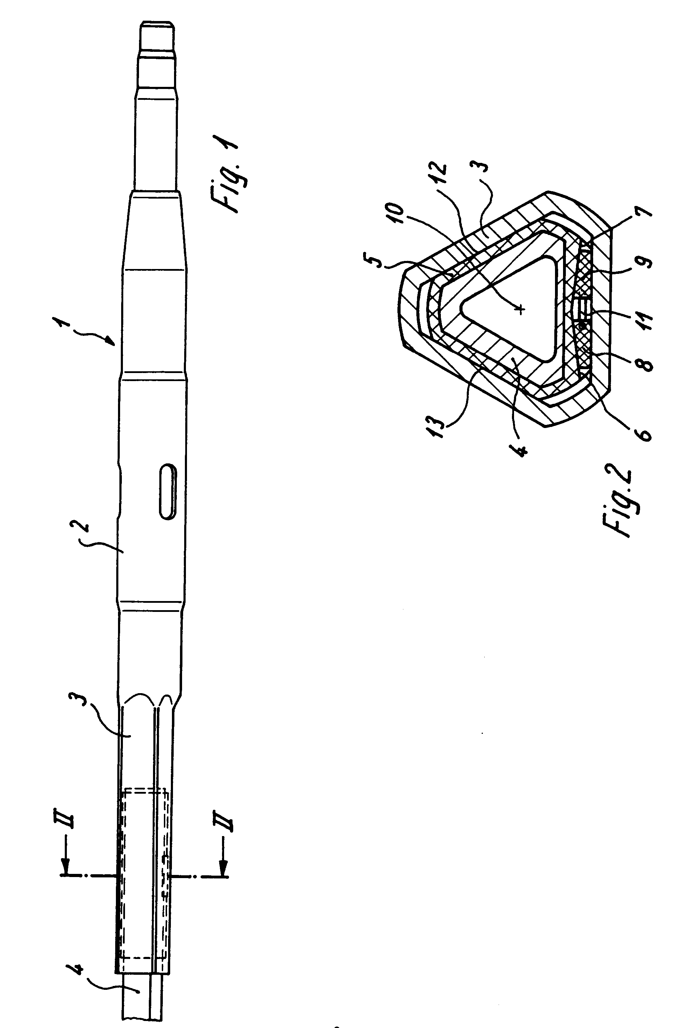

Bei dem Ausführungsbeispiel nach der Fig. 2 sind in eine dieser Flächen der Gleitbuchse 5 schiefe Ebenen 6,7 eingearbeitet, die gleichzeitig mit dem Aufbringen der Gleitbuchse auf das Innenrohr 4 angeformt werden. Auf diesen schiefen Ebenen sind zwei Keilstücke 8,9 quer zur Lenksäulenachse 10 verschiebbar unter der Wirkung einer zwischen den Keilstücken liegenden Feder 11 gelagert. Diese Keilstücke werden unter der Federwirkung an die zugeordnete Innenfläche des Außenrohres gepreßt und drücken die Gleitbuchse 5 an die Gleitflächen 12 und 13 des Außenrohres, so daß die Gleitbuchse spielfrei an den genannten Gleitflächen 12 und 13 des Außenrohres anliegt und gegenüber der verbleibenden Innengleitfläche des Außenrohres die Keilstücke für eine Spielfreiheit sorgen.

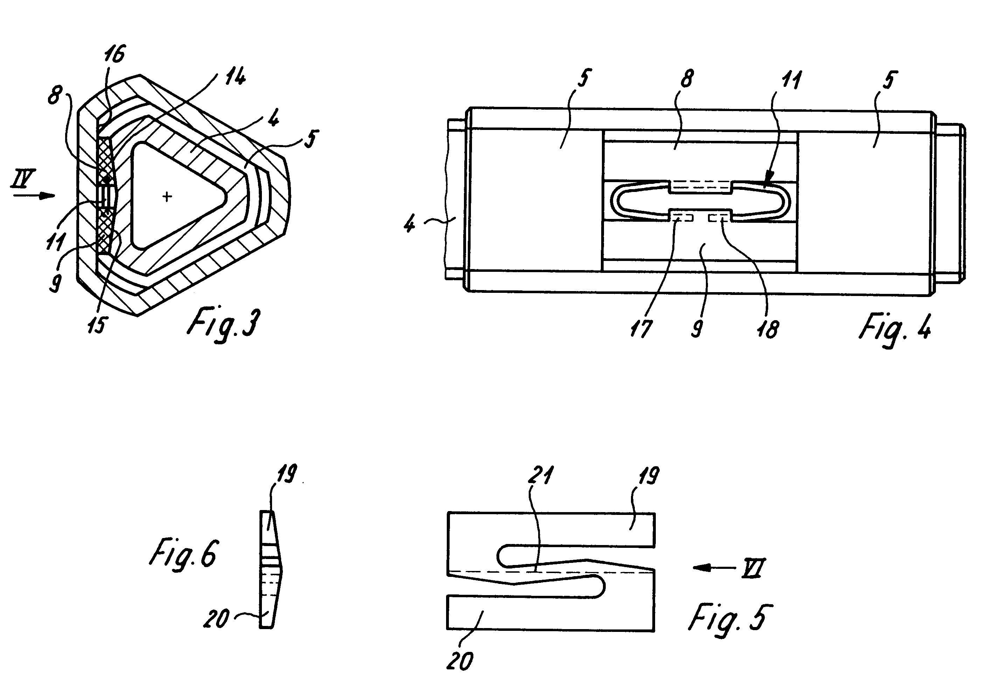

Bei dem Ausführungsbeispiel nach den Fig. 3 und 4 sind die schiefen Ebenen 14 und 15 Flächen des Innenrohres 4, so daß die Keilstücke 8 und 9, die auf diesen schiefen Ebenen aufliegen und von der Feder 11 an die Gleitfläche 16 des Außenrohres gepreßt werden, in einer Ausnehmung der Gleitbuchse 5 oder zwischen zwei in axialem Abstand voneinander angeordneten Gleitbuchsen 5 vorgesehen sind.

Bei den Ausführungsbeispielen nach den Fig. 2, 3 und 4 ist die Feder 11 als Stahlfeder ausgebildet. Diese Feder ist im Grundriß C-förmig und weist Enden 17,18 auf, die in ein Keilstück 9 eingreifen, das aus Kunststoff gefertigt sein kann. Ein Teil des den Enden 17,18 gegenüberliegenden Schenkels der Feder ist in dem anderen Keilstück 8 eingebettet.

Die Keilstücke können auch aus Druckguß gefertigt sein.

Bei dem Ausführungsbeispiel nach den Fig. 5 und 6 sind die Keilstücke 19,20 einstückig mit einer Feder 21 ausgebildet, wobei die Keilstücke und die Feder aus Kunststoff gefertigt sein können. Es ist jedoch auch denkbar, Keilstücke und Feder einstückig aus Metall herzustellen.

### Bezugszeichen

1 Kraftfahrzeuglenksäule
2 Außenrohr
3 Teilbereich
4 Innerohr
5 Gleitbuchse
6 schiefe Ebene
7 schiefe Ebene
8 Keilstück
9 Keilstück
10 Lenksäulenachse
11 Feder
12 Gleitfläche
13 Gleitfläche
14 schiefe Ebene
15 schiefe Ebene
16 Gleitfläche
17 Ende
18 Ende
19 Keilstück
20 Keilstück
21 Feder

## Patentansprüche

1. Als Teleskoprohr ausgebildete, vorzugsweise durch Handkraft höhenverstellbare Kraftfahrzeuglenksäule mit einem mit mindestens einer aufgegossenen oder aufgespritzten Gleitbuchse aus Kunststoff oder Metall versehenen Innenrohr und einem Außenrohr mit vorgefertigten Gleitflächen, **dadurch gekennzeichnet**, daß zwischen dem Außenrohr und dem Innenrohr (4) oder zwischen dem Außenrohr und der Gleitbuchse (5) zwei Keilstücke (8,9; 19,20) mittels einer dazwischen liegenden Feder (11,21) quer zur Lenksäulenachse (10) auf zwei schiefen Ebenen (6,7;14,15) verschiebbar gelagert sind.

2. Kraftfahrzeuglenksäule nach Anspruch 1, dadurch gekennzeichnet, daß die schiefen Ebenen (6,7;14,15) Teile der Gleitbuchse (5) oder des Innenrohres (4) sind.

3. Kraftfahrzeuglenksäule nach Anspruch 1 oder 2, dadurch gekennzeichnet, daß das Innenrohr (4) zwei in Abstand voneinander angeordnete Gleitbuchsen (5) aufweist, zwischen denen die federbelasteten Keilstücke (8, 9;19,20)vorgesehen sind.

4. Kraftfahrzeuglenksäule nach Anspruch 1 oder 2, dadurch gekennzeichnet, daß das Innenrohr (4) mit einer Gleitbuchse (5) ausgerüstet ist, die eine Ausnehmung zur teilweisen Aufnahme der Keilstücke aufweist, deren Bodenfläche durch die schiefen Ebenen (6,7) gebildet ist.

5. Kraftfahrzeuglenksäule nach Anspruch 1, dadurch gekennzeichnet, daß die Feder (11) als Metallfeder und im Grundriß C-förmig ausgebildet ist.

6. Kraftfahrzeuglenksäule nach Anspruch 5, dadurch gekennzeichnet, daß die Enden (17,18) der C-förmigen Feder (11) in ein aus Kunststoff gefertigtes Keilstück (9) eingreifen und ein Teil des Schenkels der Feder, der den Enden (17,18) gegenüberliegt, in dem anderen Keilstück aus Kunststoff eingebettet ist.

7. Kraftfahrzeuglenksäule nach einem der Ansprüche 1 bis 5, dadurch gekennzeichnet, daß die Keilstücke aus Druckguß gefertigt und die Feder als Stahlfeder ausgebildet ist.

8. Kraftfahrzeuglenksäule nach Anspruch 1, dadurch gekennzeichnet, daß die Feder (21) mit den Keilstücken (19,20) einstückig ist.

9. Kraftfahrzeuglenksäule nach Anspruch 8, dadurch gekennzeichnet, daß die Feder (21) und die Keilstücke (19,20) aus Kunststoff bestehen.

## Claims

1. A motor vehicle steering column wich is in the form of a telescopic tube and which is preferably adjustable in height by manual force, comprising an inner tube provided with at least one sliding bush of plastics or metal which is cast or injection-moulded thereon, and an outer tube with prefabricated sliding surfaces, characterised in that between the outer tube and the inner tube (4) or between the outer tube and the sliding bush (5) two wedge portions (8, 9; 19, 20) are mounted displaceably transversely to the axis (10) of the steering column on two inclined planes (6, 7; 14, 15) by means of a spring (11, 21) disposed between the wedge portions.

2. A motor vehicle steering column according to claim 1 characterised in that the inclined planes (6, 7; 14, 15) are parts of the sliding bush (5) or the inner tube (4).

3. A motor vehicle steering column according to claim 1 or claim 2 characterised in that the inner tube (4) has two spaced-apart sliding bushes (5), between which are provided the spring-loaded wedge portions (8, 9; 19, 20).

4. A motor vehicle steering column according to claim 1 or claim 2 characterised in that the inner tube (4) is provided with a sliding bush (5) which has an opening for partially accommodating the wedge portions, the bottom surface of which is formed by the inclined planes (6, 7).

5. A motor vehicle steering column according to claim 1 characterised in that the spring (11) is in the form of a metal spring and is of a C-shaped configuration in plan.

6. A motor vehicle steering column according to claim 5 characterised in that the ends (17, 18) of the C-shaped spring (11) engage into a wedge portion (9) made from plastics material and a part of the limb of the spring which is disposed opposite the ends (17, 18) is embedded in the other wedge portion of plastics material.

7. A motor vehicle steering column according to one of claims 1 to 5 characterised in that the wedge portions are made from die cast metal and the spring is in the form of a steel spring.

8. A motor vehicle steering column according to claim 1 characterised in that the spring (21) is integral with the wedge portions (19, 20).

9. A motor vehicle steering column according to claim 8 characterised in that the spring (21) and the wedge portions (19, 20) comprise plastics material.

## Revendications

1. Colonne de direction pour véhicule à moteur conçue comme un tube télescopique, réglable en hauteur de préférence manuellement, avec un tube intérieur pourvu d'au moins une douille de glissement coulée ou injectée en plastique ou en métal et un tube extérieur avec des surfaces de glissement usinées à l'avance, caractérisée en ce que deux pièces en coin (8, 9 ; 19, 20) sont disposées entre le tube extérieur et le tube intérieur (4) ou entre le tube extérieur et la douille de glissement (5) de manière mobile perpendiculairement à l'axe de la colonne de direction (10) sur deux plans inclinés (6, 7 ; 14, 15) au moyen d'un ressort (11, 21) situé entre elles.

2. Colonne de direction pour véhicule à moteur selon la revendication 1, caractérisée en ce que les plans inclinés (6, 7 ; 14, 15) font partie de la douille de glissement (5) ou du tube intérieur (4).

3. Colonne de direction pour véhicule à moteur selon la revendication 1 ou 2, caractérisée en ce que le tube intérieur (4) présente deux douilles de glissement (5) disposées à distance l'une de l'autre, entre lesquelles sont prévues les pièces en coin (8, 9 ; 19, 20) chargées par ressort.

4. Colonne de direction pour véhicule à moteur selon la revendication 1 ou 2, caractérisée en ce que le tube intérieur (4) est pourvu d'une douille de glissement (5) qui présente un évidement pour la réception partielle des pièces en coin, dont la surface de fond est formée par les plans inclinés (6, 7).

5. Colonne de direction pour véhicule à moteur selon la revendication 1, caractérisée en ce que le ressort (11) est conçu comme un ressort métallique en forme de C en projection horizontale.

6. Colonne de direction pour véhicule à moteur selon la revendication 5, caractérisée en ce que les extrémités (17, 18) du ressort (11) en forme de C se mettent en prise dans une pièce en coin (9) fabriquée en matière plastique et une partie du bras du ressort, qui fait face aux extrémités (17, 18), est logée dans l'autre pièce en coin en plastique.

7. Colonne de direction pour véhicule à moteur selon l'une quelconque des revendications 1 à 5, caractérisée en ce que les pièces en coin sont fabriquées en fonte coulée sous pression et le ressort est conçu comme un ressort en acier.

8. Colonne de direction pour véhicule à moteur selon la revendication 1, caractérisée en ce que le ressort (21) est d'un seul tenant avec les pièces en coin (19, 20).

9. Colonne de direction pour véhicule à moteur selon la revendication 8, caractérisée en ce que le ressort (21) et les pièces en coin (19, 20) sont réalisées en matière plastique.
